(19) **Europäisches Patentamt**
**European Patent Office**
**Office européen des brevets**

(11) **EP 1 344 924 B1**

(12) **FASCICULE DE BREVET EUROPEEN**

(45) Date de publication et mention
de la délivrance du brevet:
**14.02.2007 Bulletin 2007/07**

(51) Int Cl.:
*F02D 41/40* *(2006.01)* *F01N 3/023* *(2006.01)*

(21) Numéro de dépôt: **03290627.3**

(22) Date de dépôt: **13.03.2003**

(54) **Procédé de régénération d'un filtre à particules**

Verfahren zur Regeneration eines Partikelfilters

Particle filter regeneration method

(84) Etats contractants désignés:
**BE DE ES**

(30) Priorité: **13.03.2002 FR 0203103**

(43) Date de publication de la demande:
**17.09.2003 Bulletin 2003/38**

(73) Titulaire: **Renault s.a.s.**
**92100 Boulogne Billancourt (FR)**

(72) Inventeurs:
• **Chaumeaux, Romuald**
**91290 Arpajon (FR)**
• **Thuault, Benoît**
**91510 Lardy (FR)**
• **Di Muro, David**
**91590 Cerny (FR)**

(74) Mandataire: **Rougemont, Bernard**
**RENAULT TECHNOCENTRE**
**Département Propriété Intellectuelle**
**Sce 00267 TCR GRA 2 36**
**1, avenue du Golf**
**78288 Guyancourt cedex (FR)**

(56) Documents cités:
**EP-A- 1 035 314** **DE-A- 19 747 231**
**FR-A- 2 774 421** **FR-A- 2 799 508**
**US-A- 4 685 290**

• **PAYRI, F. ET. AL.: "Influence of the Post-Injection Pattern on Performance, Soot and NOx Emissions in a HD Diesel Engine" SAE TECHNICAL PAPERS SERIES , no. 2002-01-0502, 4 mars 2002 (2002-03-04), XP002243430**
• **CHEN, S. KEVIN: "Simultaneous Reduction of NOx and Particulate Emissions by Using Multiple Injections in a Small Diesel Engine" SAE TECHNICAL PAPER SERIES, no. 2000-01-3084, 21 août 2000 (2000-08-21), XP002243429**
• **PATENT ABSTRACTS OF JAPAN vol. 2000, no. 11, 3 janvier 2001 (2001-01-03) & JP 2000 227061 A (HINO MOTORS LTD), 15 août 2000 (2000-08-15)**

## Description

## DOMAINE TECHNIQUE

La présente invention concerne un procédé de régénération d'un filtre à particules dans la ligne d'échappement d'un moteur à combustion interne.

## ETAT DE LA TECHNIQUE ANTERIEURE

Les normes concernant la pollution et la consommation des moteurs à combustion interne équipant les véhicules deviennent de plus en plus sévères dans l'ensemble des pays industrialisés.

Parmi les dispositifs de traitement connus pour éliminer les particules de suie émises par de tels moteurs on peut citer les filtres à particules, qui sont insérés dans les lignes d'échappement de ces moteurs.

Les filtres à particules sont adaptés pour piéger les particules de suie contenues dans les gaz d'échappement.

Des systèmes de régénération permettent de brûler périodiquement les particules piégées dans ces filtres et éviter leur colmatage. La mise en action de ces différents systèmes d'aide à la régénération est réalisée par un système électronique de commande qui détermine en fonction d'un certain nombre de paramètres et notamment le chargement du filtre à particules, l'instant de la régénération.

Ainsi, le document FR 2 774 421 divulgue un système de gestion du fonctionnement d'un filtre à particules associé à un moteur de véhicule automobile, et décrit comment la mise en action des moyens d'aide à la régénération est déclenchée dès lors que la masse de suie dans le filtre est supérieure à une valeur de seuil, cette masse de suie étant déterminée à partir de la mesure de la perte de charge aux bornes du filtre à particules et des conditions de fonctionnement du moteur. De manière connue, la stratégie de mise en action de tels moyens d'aide à la régénération, sitôt le seuil de chargement atteint, est relativement simple. Elle consiste essentiellement à maintenir ces moyens activés pendant une période de temps calibrée ou encore à maintenir les moyens activés tant que le chargement n'est pas repassé en dessous d'une seconde valeur de seuil donnée.

Les systèmes de régénération de l'art connu sont de différents types.

Des systèmes de chauffage par résistance électrique, notamment par grilles chauffantes, permettent de porter la température des gaz d'échappement à une valeur suffisante pour provoquer la combustion des particules dans le filtre. Ces systèmes nécessitent une puissance électrique importante qu'il n'est pas toujours possible de fournir. De plus, ils compliquent la conception de la ligne d'échappement.

D'autres systèmes proposent d'augmenter la température des gaz d'échappement par l'utilisation d'injections spécifiques : par exemple une injection retardée ou une post-injection d'une quantité supplémentaire de carburant dans au moins une des chambres de combustion.

La demande de brevet français FR 2 799 508 décrit un procédé d'injection retardée de carburant pour un moteur à combustion. Dans ce procédé il y a injection de carburant dans au moins un des cylindres d'un moteur à combustion, avec l'injection d'une quantité principale de carburant dépendant du point de fonctionnement du moteur, et lors de la phase de régénération du système de traitement des gaz d'échappement tel qu'un filtre à particules, l'augmentation de ladite quantité principale de carburant. L'injection de cette quantité de carburant augmentée est retardée par rapport au point mort haut (PMH) du piston du moteur d'un retard compris entre 0 degrés vilebrequin et 35 degrés vilebrequin. Ce retard a pour objectif d'augmenter l'énergie dégagée à l'échappement. La conséquence néfaste est que cela diminue le rendement du moteur. Pour maintenir le couple sur l'arbre moteur, il faut augmenter la quantité d'injection principale.

Dans la post-injection, après avoir injecté la quantité de carburant nécessaire au fonctionnement "classique" du moteur, on injecte une quantité supplémentaire de carburant. Une partie de cette quantité de carburant additionnelle s'enflamme en produisant une augmentation de la température des gaz d'échappement. L'autre partie de cette quantité est transformée en produits d'oxydation partielle comme le monoxyde de carbone CO et les hydrocarbures HC. Cette post-injection a pour objectif d'apporter des hydrocarbures mi-brutes à l'échappement pour augmenter l'exothermicité du catalyseur. Cette post-injection est phasée par rapport au point mort haut ou PMH car elle est indépendante de l'injection. Toutefois, il peut y avoir une correction de débit de l'injection principale pour ne pas affecter le couple du moteur. Les débits sont relativement importants, c'est-à-dire supérieurs à 5 mg/coup.

Mais ces modes d'injection, utilisés pour régénérer le filtre à particules, peuvent provoquer des émissions importantes de particules dans la ligne d'échappement et affecter la vitesse de régénération du filtre à particules.

L'invention a pour objectif d'améliorer le bilan de la régénération en diminuant le flux de particules en entrée du filtre à particules en phase de régénération.

## EXPOSÉ DE L'INVENTION

La présente invention concerne un procédé de régénération d'un filtre à particules, inséré dans la ligne d'échappement d'un moteur à combustion interne, qui comporte une injection principale de carburant dans au moins un de ses cylindres, caractérisé en ce que, dans au moins ce cylindre, on réalise une post-injection de carburant déphasée d'un angle déterminé par rapport à l'injection principale, le débit de post-injection étant inférieur à 8 mg/coup.

L'angle entre la fin de l'injection principale et le début de la post-injection, ou "phasage", est compris entre 3 degrés vilebrequin et 10 degrés vilebrequin.

Avantageusement, ce procédé comprend une pré-injection de carburant dans au moins un cylindre du moteur.

Le procédé de l'invention n'a pas pour objet d'augmenter la température d'échappement mais d'oxyder les particules produites par la combustion du carburant de l'injection principale, et éventuellement la pré-injection, en modifiant les conditions thermomécaniques dans la (ou les) chambre(s) de combustion.

L'invention permet ainsi d'améliorer le bilan de régénération du filtre à particules en diminuant le flux de particules en entrée de ce filtre en phase de régénération. On peut de plus utiliser, éventuellement, une stratégie classique, telle que l'injection retardée ou la post-injection vues précédemment, qui permet d'augmenter les températures d'échappement.

Le procédé de l'invention présente de nombreux avantages par rapport aux procédés de l'art connu :

- le logiciel utilisé est simple : il concerne une cartographie de phasage par rapport à l'injection principale du mode régénération et des cartographies classiques de débit et de corrections dues aux conditions extérieures (pression, température...),
- la calibration nécessaire est simple,
- la régénération est plus complète et plus rapide,
- en cas d'échec d'une régénération, il n'y a pas d'augmentation importante de la masse de particules stockées dans le filtre à particules.

## BRÈVE DESCRIPTION DES DESSINS

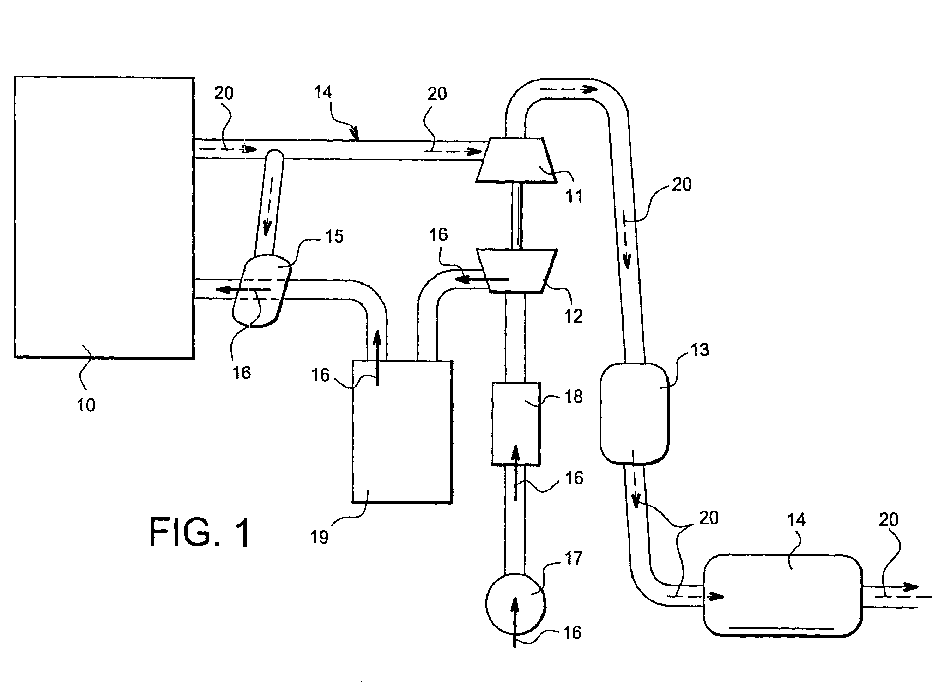

La figure 1 illustre l'implantation d'un filtre à particules dans la ligne d'échappement d'un moteur à combustion interne.

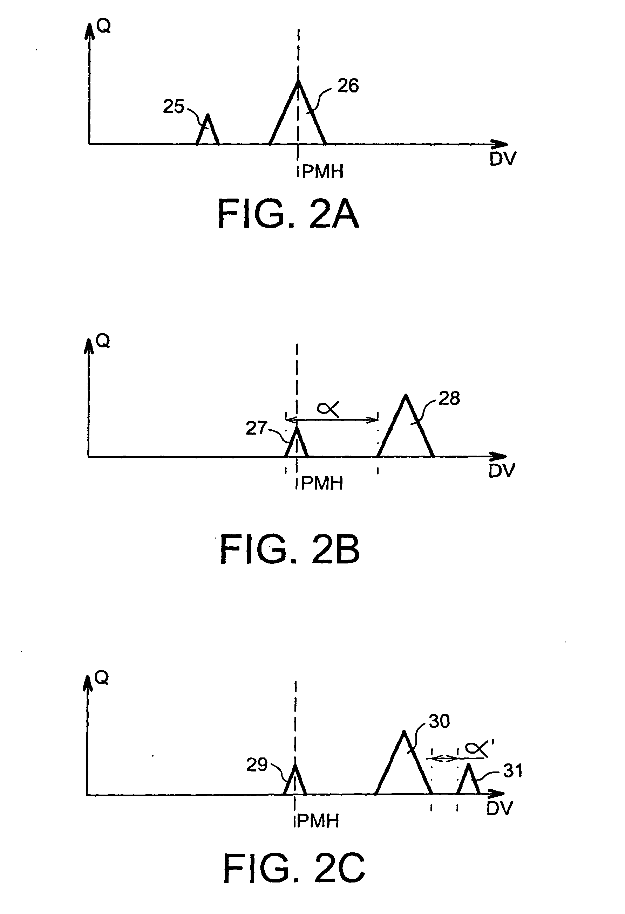

Les figures 2A, 2B et 2C sont des diagrammes qui illustrent la quantité de carburant injectée Q en fonction de l'angle du vilebrequin DC, pour différents modes d'injection ; la figure 2A illustrant un mode d'injection normale avec chargement du filtre à particules, la figure 2B illustrant une injection de l'art connu pour la régénération d'un filtre à particules, la figure 2C illustrant l'injection pour la régénération du filtre à particules selon le procédé de l'invention.

## EXPOSÉ DÉTAILLÉ DE L'INVENTION

La figure 1 illustre la structure générale d'un moteur à combustion interne, destiné à équiper par exemple un véhicule automobile. Ce moteur 10 est ici suralimenté par un turbo-compresseur (turbine 11 + compresseur 12). La ligne d'échappement 14 de ce moteur 10 est équipée de dispositifs de post-traitement actifs destinés à purifier les gaz d'échappement, ici un pré-catalyseur 13 et un filtre à particules 14. Une vanne EGR 15 ("Exhaust Gaz Recirculation") permet une recirculation des gaz d'échappement. La circulation des gaz frais, référencée 16, traverse successivement un filtre à air 17, un débitmètre 18, le compresseur 12 et un refroidisseur d'air de suralimentation 19. La circulation des gaz brûlés est, quant à elle, référencée 20.

Le filtre à particules 14 pourrait, également, être placé à la place de pré-catalyseur 13 et assurer les fonctions de piégeage des particules ainsi que l'oxydation des gaz d'échappement (fonction usuelle du pré-catalyseur).

Pour que la régénération d'un filtre à particules soit rapide, il faut que la cinétique de combustion des particules stockées dans ce filtre soit supérieure au flux de particules en entrée du filtre. Le procédé de l'invention consiste à associer un type particulier de post-injection à un mode d'injection quelconque utilisé pour régénérer le filtre à particules. Cette post-injection permet de diminuer les émissions de particules du moteur en phase de régénération pour améliorer la vitesse de la régénération.

En effet, la vitesse instantanée C de la régénération du filtre à particules est telle que

$$ C = \left( \frac{DMb}{Dt} - \frac{DMc}{Dt} \right), $$

avec :

$\dfrac{DMb}{Dt}$ : cinétique de combustion des particules stockées dans le filtre à particules,

$\dfrac{DMc}{Dt}$ : émission instantanée de particules du moteur pendant la phase de régénération.

Le procédé de l'invention a pour objet de modifier les conditions thermo-dynamiques dans au moins une chambre de combustion du moteur de manière à oxyder les particules produites par la combustion du carburant. Ceci se fait par l'emploi d'une post-injection très proche de l'injection principale (phasage compris entre 3 degrés vilebrequin et 10 degrés vilebrequin) du mode d'injection utilisé pour la régénération du filtre à particules. Le débit de l'injection principale peut alors être très légèrement modifié pour qu'il n'y ait pas d'impact sur le couple du moteur.

Les figures 2A, 2B et 2C sont des diagrammes illustrant différents types d'injection, et notamment la post-injection du procédé de l'invention.

La figure 2A illustre une injection normale comportant une pré-injection 25 et une injection principale 26 (injection d'une quantité de carburant Q1) entraînant le chargement du filtre à particules.

La figure 2B illustre une injection de l'art connu pour la régénération du filtre à particules de comportant une pré-injection 27 et une injection principale retardée 28, la quantité de carburant Q2 injectée lors de cette injection principale étant telle : Q2 > Q1. L'angle de phasage α entre le début de la pré-injection et le début de l'injection principale est compris entre 10 degrés vilebrequin et 40 degrés vilebrequin, de préférence entre 20 degrés vilebrequin et 25 degrés vilebrequin. PMH est le point mort haut du piston.

La figure 2C illustre une injection pour régénération du filtre à particules selon le procédé de l'invention comportant une éventuelle pré-injection 29, une injection principale 30 décalées et une post-injection particulière 31 pour réduire les émissions de particules des injections 29 et 30, telles qu'illustrées déjà à la figure 2B. La quantité de carburant Q3 injectée lors de cette injection principale est telle que : Q3 ≤ Q2. L'angle de phasage α' entre la fin de l'injection principale et le début de la post-injection est compris entre 3 degrés vilebrequin et 10 degrés vilebrequin.

Contrairement à la post-injection de l'art connu, analysée précédemment, la post-injection 31 du procédé de l'invention est décalée d'un angle faible par rapport à l'injection principale 30 et n'apporte pas de gain de température à l'échappement. Son efficacité dépend directement de l'angle de phasage α'. Les débits de post-injection sont très petits, inférieurs à 8 mg/coup.

**Revendications**

1. Procédé de régénération d'un filtre à particules, inséré dans la ligne d'échappement d'un moteur à combustion interne, qui comporte une injection principale de carburant (30), retardée par rapport au point mort haut en phase de régénération, dans au moins un de ses cylindres, **caractérisé en ce que**, pendant lesdites phases de régénération on améliore la vitesse de régénération en réalisant dans au moins ce cylindre une post-injection de carburant (31), provoquant une oxydation des particules produites par la combustion du carburant de l'injection principale, ladite post injection étant déphasée par rapport à l'injection principale (30) d'un angle (α) compris entre 3 et 10 degrés vilebrequin entre la fin de l'injection principale et le début de la post-injection (31), le débit de post-injection étant inférieur à 8 mg/coup.

2. Procédé selon la revendication 1, qui comporte une pré-injection de carburant dans au moins un cylindre du moteur.

**Claims**

1. Method for regenerating a particle filter, fitted in the exhaust pipe of an internal combustion engine, which comprises a main injection of fuel (30), which is retarded in the relation to top dead centre during the regeneration phase, into at least one of its cylinders, **characterized in that**, during the said regeneration phases, the rate of regeneration is improved by carrying out in at least this cylinder a post-injection of fuel (31), causing an oxidation of the particles produced by the combustion of the fuel in the main injection, the said post-injection being out-of-phase in relation to the main injection (30) by an angle (α) of between 3 and 10 crankshaft degrees, between the end of the main injection and the start of the post-injection (31), the post-injection delivery being less than 8 mg/stroke.

2. Method according to Claim 1, which comprises a pre-injection of fuel into at least one cylinder of the engine.

**Patentansprüche**

1. Verfahren zur Regeneration eines Partikelfilters, der in die Auspuffleitung eines Verbrennungsmotors eingesetzt ist, umfassend eine Haupttreibstoffeinspritzung (30), die in Bezug auf den oberen Totpunkt in der Regenerationsphase in mindestens einem seiner Zylinder verzögert ist, **dadurch gekennzeichnet, dass** während der Regenerationsphasen die Regenerationsgeschwindigkeit verbessert wird, wobei in mindestens diesem Zylinder eine Treibstoffnacheinspritzung (31) vorgenommen wird, die zu einer Oxidation der durch die Verbrennung des Treibstoffes der Haupteinspritzung erzeugten Partikel führt, wobei die Nacheinspritzung in Bezug auf die Haupteinspritzung (30) um einen Winkel (α) zwischen 3 und 10 Grad Kurbelwelle zwischen dem Ende der Haupteinspritzung und dem Anfang der Nacheinspritzung (31) phasenverschoben ist, wobei die Menge der Nacheinspritzung um 8 mg/Einspritzung geringer ist.

2. Verfahren nach Anspruch 1, umfassend eine Treibstoffvoreinspritzung in mindestens einen Zylinder des Motors.

FIG. 1

FIG. 2A

FIG. 2B

FIG. 2C